# EUROPEAN PATENT SPECIFICATION

(11) **EP 2 223 667 B1**
(45) Date of publication and mention of the grant of the patent: **20.11.2013**
(21) Application number: 09002744.2
(22) Date of filing: 26.02.2009
(51) Int. Cl.: A61C 8/00

(54) **A dental implant kit**
Zahnimplantat-Kit
Kit d'implant dentaire

(43) Date of publication of application: 01.09.2010
(73) Proprietor: Nobel Biocare Services AG, 8058 Zürich-Flughafen (CH)
(72) Inventor: Brajnovic, Izidor, 51170 Rydal (SE)
(74) Representative: Roman Ekstedt, Måns

(56) References cited:
- WO-A-2008/155637
- FR-A- 2 900 566
- US-A- 5 007 835
- US-A- 5 620 323
- US-A1- 2002 004 189
- US-A1- 2006 024 644
- US-A1- 2006 216 673
- US-A1- 2008 261 175

## Description

### FIELD OF THE INVENTION

The present application relates generally to the field of implants, such as dental implants, of the kind where a superstructure, such as dental bridge, may be secured to a structure, such at a jawbone of a patient or a model of the jawbone. More specifically, the application relates to an implant kit including such an implant and to a method for connecting a superstructure to an implant.

### BACKGROUND OF THE INVENTION

A superstructure may be used to replace a missing body part of a patient. The superstructure may be supported by one or several implants applied in bone substance of the patient.

One application of a superstructure is a dental bridge, which may be used to replace missing teeth in a patient's jaw. Such a bridge may be secured to existing natural teeth belonging to the patient. Dental bridges may also be secured to dental implants that have been secured to the patient's jawbone. For example, one end of a bridge may be secured to a natural tooth while another end of the bridge is secured to a dental implant or to a distance piece, normally referred to as an abutment, connected to such a dental implant. A dental bridge may also be secured exclusively to dental implants, possibly indirectly via abutments. This may be the case, for example, when the patient does not have any natural teeth left. If a dental bridge is to be placed in a jaw where a number of dental implants have been screwed to the jawbone of the patient, it may happen that the top parts of the dental implants are located at height levels, which are different from planned positions of the implants. This may e.g. happen during so called immediate loading of the implants, wherein the superstructure is pre-planned before surgery and installed immediately following installation of the implants. In such circumstances, a gap between the connection interface of the implant and the connection interface of the superstructure may occur if an implant is installed deeper than was planned for when the superstructure was made. This misalignment has to be compensated for. Conventionally, this was not an issue when the superstructure was made after surgery by taking an impression to register the exact location of the installed implant. With pre-planned superstructures, this has to be compensated for. Such adjustment can be made using telescopic abutments between the superstructure and the implant. However, such telescopic abutments have in some situations a tendency to cause irritation to the soft tissue, which in turn may cause prolonged healing time.

Planned positions of the implants may be used to pre-prepare the superstructure to fit the implants, after installation, before they are actually installed. The positions of the implants can be planned using a planning software or by a model based approach, wherein implant replicas are installed in a model of the patients anatomy. Such computer and model based planning procedures are currently available via the applicant of the present invention by the NobelGuide planning and treatment concept.

WO 03061512 and WO05060862 disclose adaptable devices for connecting preplanned superstructure to implants installed slightly differently than originally planned. Another example of how a dental bridge may be secured to the jaw of a patient is disclosed in, for example, US patent No. 7175434 to Brajnovic.

US5620323 discloses a self-cutting implant anchorable in a jawbone. A thread cutting portion of the implant includes a plurality of self-tapping threads. An abutment is fastenable to the implant by an abutment screw, which has a threaded root end for engaging lower portion of an implant cavity. The direction of the threads of the root end of the screw is opposite to the direction of the cutting teeth of the implant.

When a dental bridge is to be secured to, for example, a number of dental implants, it may be desirable that the height of the dental implants matches the lower contour of the dental bridge, i.e. its connection interfaces are supported by connection interfaces of the dental implants.

Hence, an improved method for installing a superstructure to a patient, an implant kit comprising a superstructure, and an implant that can be used for securing a superstructure to a patient would be advantageous and in particular allowing for improved precision, increased flexibility, cost-effectiveness, and/or patient safety and discomfort would be advantageous.

### SUMMARY OF THE INVENTION

Accordingly, embodiments of the present invention preferably seek to mitigate, alleviate or eliminate one or more deficiencies, disadvantages or issues in the art, such as the above-identified, singly or in any combination by providing a kit including such an implant and a superstructure, and a method for retracting towards a superstructure applied to a patient in order close a gap between the implant and the superstructure.

The invention is defined by the independent claims.

According to an aspect, an implant for insertion into bone of a patient and attachment of a superstructure, comprises a body comprising an external surface for apposition to bone, an apical end, and a coronal end; an insertion interface at the coronal end for engagement with an insertion tool and for inserting the implant in an insertion direction; a connection interface adapted to connect the implant to an connection interface of a superstructure; and a retraction interface for engagement with a retractionmember when the superstructure is positioned for connection to the connection interface and being configured for retracting the implant from an applied position in a retraction direction.

The external surface comprises a first threaded part with at least one thread adapted to engage the bone, the retraction interface comprises a second threaded part with at least one thread, the at least one thread of the first threaded part having a first thread direction and the at least one thread of the second threaded part having a second thread direction that is opposed to that of the at least one thread of the first threaded part.

The at least one thread of the first threaded part comprises an external thread while the at least one thread of the second threaded part comprises an internal thread.

The at least one thread of the first threaded part may be left-threaded and the at least one thread of the second threaded part may be right-threaded.

The thread of the first threaded part may have a pitch angle that is equal to or larger than 45°.

The first threaded part may have a plurality of threads.

The first threaded part may have 6 - 14 threads, such as 8 - 10 threads.

The at least one thread of the first threaded part may have a thread depth of 0.12mm - 0.5mm.
The at least one thread (5) of the first threaded part (4) may have a pitch in the range of 3mm - 5mm.

The implant kit comprises in combination: at least one implant, a superstructure comprising a connection interface adapted to be secured to the implant, and a retraction member. The superstructure comprises a through-hole for the retraction member. The retraction member is being adapted to engage with the retraction interface of the implant to retract the implant from an applied position towards the superstructure. The applied position may be in a structure, such as bone or a model of bone. The bone may be, e.g., a jawbone of a patient. The superstructure is in some embodiments a pre-planned superstructure. Preplanned superstructure is in this context a superstructure prepared based on planned positions of implants in bone of the patient.
The preplanned superstructure is made and available before surgery to install the implants. The superstructure may be at least partially prepared using a model, wherein implants are installed in a model of the patient's anatomy where the implants will be installed. An implant installed in a model may e.g. be an implant replica, which has a connection interface, which corresponds to the connection interface of the implant that will be installed in the patient. Such connection interface of the implant or the implant replica may have a platform adapted to support a connection interface of the superstructure. The connection interface of the superstructure may comprises a seat, such as an annular substantially flat surface, a conical surface, a curved surface, etc, that is adapted to abut a mating surface of the connection interface of the implant. The connection interface of the implant may be provided on a distance piece, such as an abutment, detachably connected to the implant. Alternatively, the distance piece and the implant are provided as a single unit. Hence the implant and the distance piece may comprise a one-piece or a two-piece dental implant.

The retraction member comprises an external thread, and the retraction interface of the implant comprises an internal thread configured to engage the external thread of the retraction member.

The pitch of the external thread of the retraction member and the pitch of the internal thread of the implant may be smaller than the pitch of the external thread of the implant.

The retraction member may be right-threaded.

The through-hole of the superstructure may comprise a support surface for the retraction member. The retraction member may comprise a fastening element, such as a fastening screw, having a head dimensioned to abut the support surface. The support surface may comprise a ledge or flange, e.g. positioned within the through hole of the superstructure. The threaded portion of the retraction member may be dimensioned to pass through the through hole of the superstructure to engage a threaded portion of the implant.

According to another aspect, a method for connecting a superstructure to at least one implant or implant structure, comprises: applying at least one implant to an applied position in a structure. The at least one implant comprises a connection interface configured to connect the implant to the superstructure, and a retraction interface configured to retract the implant from the applied position towards the superstructure; applying a superstructure such that individual connection interfaces of the superstructure are supported at separate places but at least one connection interface is separated by a gap from the connection interface of at least one dental implant; and reducing or closing the gap between the implant and the superstructure.

In some embodiments, the method comprises reducing or closing the gap by retracting the at least one implant towards the superstructure. In some embodiments, the retraction is provided by connecting a retraction member to the retraction interface of the implant separated by a gap such that the retraction member abuts a portion of the superstructure. The portion of the superstructure may be provided by a flange or ledge of a through hole of the superstructure. A portion of the retraction member may be dimensioned to pass though the through hole, and another portion thereof may be dimensioned to abut said portion of the through hole.

Embodiments of the invention provide for elimination of separate abutments for compensating for misalignments between an implant and a superstructure. This provides in turn for a more robust arrangement, wherein e.g. the risk for fracture of the superstructure is reduced. Furthermore, gaps between separate components in the area within soft tissue can be eliminated or reduced. This provides for improved osseointegration, such as reduced time for healing in of the implant, reduced marginal bone resorption, improved bone to implant contact area, etc. Furthermore, embodiments of the invention provides for improved precision of the surgery and restorative procedure. This is provided by the inventive concept of first installing the implant, supporting the superstructure by supports, such as several implants, and retracting the implant to close any gap between the connection interface of the implant and the connection interface of the superstructure. According to the invention, any misalignment due to the surgical procedure should be taken care of by the surgeon, not by the dental technician. According to the prior art, the misalignment frequently has to be attended to by the dental technician. When the invention is used in a procedure where the superstructure is pre-planned and installed at the time of installation of the implant(s), the superstructure is perceived as the reference. The superstructure may be made based on a pre-planning of the position of the implants, such as according to the NobelGuide planning and treatment concept. Any deviation of the actual position of the implant(s) compared to the planned position(s) is taken care of by retracting the implant(s) by the surgeon. In the end, the implant(s) end up as planned relative the superstructure. Consequently, the surgery is adapted to the planned bridge, rather than wise versa according to the prior art.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

These and other aspects, features and advantages of which embodiments of the invention are capable of will be apparent and elucidated from the following description of embodiments of the present invention, reference being made to the accompanying drawings, in which
Figure 1 is a schematic representation of how a number of dental implants may be secured to the jawbone of a patient.
Figure 2 is a schematic representation corresponding to Fig. 1 and further showing a dental bridge during a part of a procedure where the bridge will be secured in the jawbone of the patient.
Figure 3 is a schematic representation corresponding to Fig. 2 and showing a subsequent stage during the fastening procedure.
Figure 4 represents a stage following the one shown in Fig. 3.
Figure 5 shows, in cross section, a dental implant and a threaded fastening element according to the present application.
Figure 6 shows some other aspects of the dental implant of Fig. 5.
Figure 7 shows, partly in cross section, an embodiment which is not part of the claimed invention, and an alternative to the embodiment shown in Fig. 5.
Figure 8 is a schematic cross sectional view showing how a dental bridge may be secured to the jawbone of a patient.
Figure 9 is a view corresponding to Fig. 8 and further illustrating details of an embodiment of a dental implant.
Figure 10 is an enlargement of a part of the dental implant illustrated in Fig. 9.

### DETAILED DESCRIPTION

Specific embodiments of the invention will now be described with reference to the accompanying drawings. In the drawings, like numbers refer to like elements.

The following description focuses on an embodiment of the present invention applicable to a dental implant and a dental bridge. It will, however, be appreciated that the invention is not limited to this application but the invention can be applied to other implants and superstructures applied to such implants. In the following, reference is made to a dental implant and a dental bridge. However, this is only made for illustrative purposes and should not be read as limiting except when explicitly mentioned. The implant may equally be other types of implant having similar structures as the disclosed dental implant, or other types of superstructures having similar structure for attachment to the implant as the disclosed dental bridge and dental implant

In some embodiments, an implant for insertion into bone of a patient or a model of a patients anatomy and for attachment of a superstructure, comprises a body comprising an external surface for apposition to bone, an apical end and a coronal end; an insertion interface at the coronal end for engagement with an insertion tool and for inserting the implant in an insertion direction; a connection interface adapted to connect the implant to an connection interface of a superstructure; and a retraction interface for engagement with a retraction member when the superstructure is positioned for connection to the connection interface and being configured for retracting the implant from an applied position in a retraction direction. The applied position may be an applied position in bone or a model of a patient's anatomy, such as a jawbone or a model of a jawbone. The retraction direction of the implant is generally opposite its insertion direction. Hence, embodiments of the invention provides for compensating for misalignments between installed implants and a superstructure made before installation of the implants.

In some embodiments, the external surface comprises a first threaded part with at least one thread 5 adapted to engage the bone 1, the retraction interface comprising a second threaded part 6 with at least one thread 7a, 7b, the at least one thread 5 of the first threaded part 4 having a first thread direction and the at least one thread of the second threaded part 6 having a second thread direction that is opposed to that of the at least one thread 5 of the first threaded part 4. This embodiment provides for a simple design, since the retraction interface and an interface for securing the superstructure to the implant is provided by a single unit.

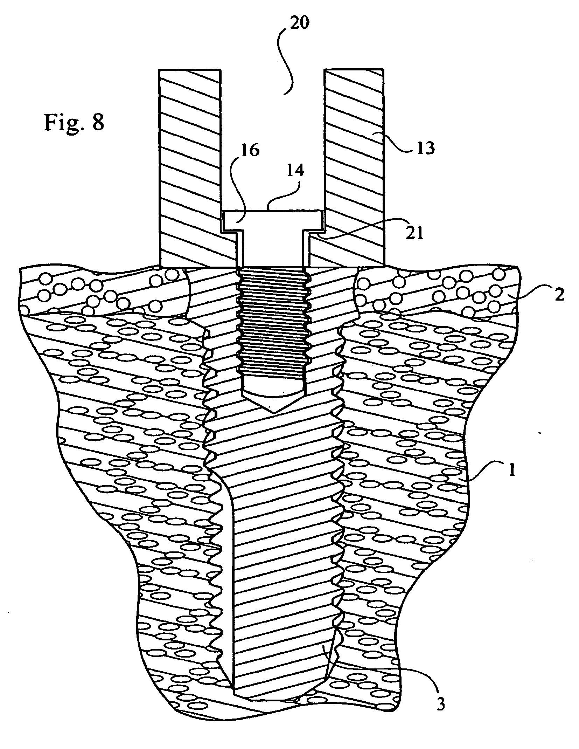

With reference to Figure 8, a superstructure embodied as a dental bridge 13 may be secured to bone, such as the jawbone 1, of a patient by means of several implants, such as dental implants 3. In Figure 8, only one dental implant 3 is shown but it should be understood that a plurality of such implants 3 is used. In Figure 8, a retraction member embodied as a threaded fastening element 14 is shown that has been placed in a through-hole 20 in the dental bridge 13 and brought into engagement with a retraction interface embodied as an internal thread 7a in the dental implant 3. The internal thread is provided within a cavity of the body of the implants. The cavity has an opening located at the coronal end of the implants. Hence, the retraction interface is accessible when the superstructure, such as a connection interface thereof, is positioned for connection to the connection interface of the implant. In the embodiment shown in Figure 8, the threaded fastening element 14 is a fastening screw with at least one external thread 5. The fastening element 14 has a screw head 16 dimensioned to abut a support surface 21 in the dental bridge 13 while the bridge 13 abuts a connection interface of the dental implant 3. The connection interface may be provided at the coronal end of the implant, or within the cavity of the body of the implant. Furthermore, the connection interface may be provided on a distance piece, such as an abutment, that extends at least partially through the gum 2 of the patient. Hence, the superstructure may be indirectly connected to the implant body, e.g. via the distance piece.

The support surface 21 may be positioned within a through hole of the superstructure. Furthermore, the support surface 21 may be provided by a flange or ledge, such as a shoulder. Hence, the through hole may have different diameters to form the support surface. A coronal end of the through hole may have a larger diameter than an apical end of the through hole facing towards the implant 3. The different diameters of the through hole form in some embodiments the support surface 21.

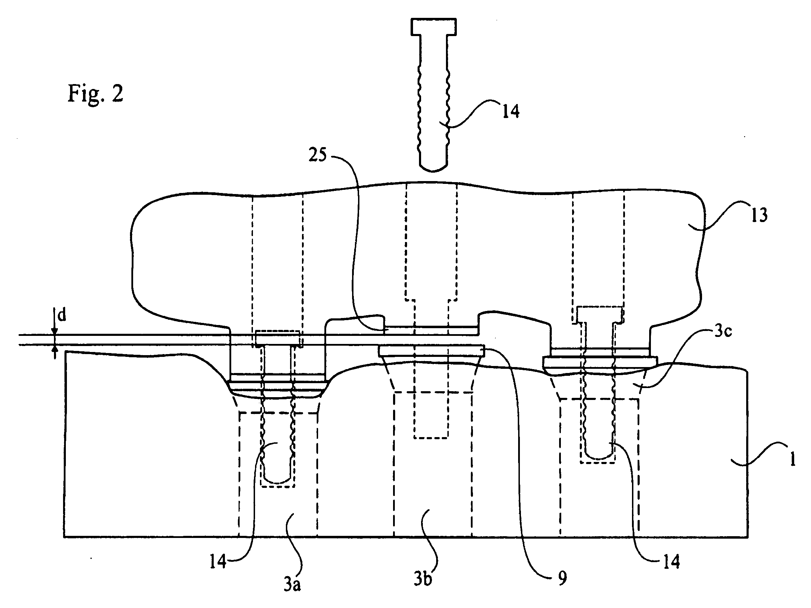

The connection interface of the implant 3 is adapted to mate or support the connection interface of the superstructure. The connection interfaces may e.g. comprise generally conical structures. Alternatively or additionally, the connection interfaces may comprise generally flat surfaces. The flat surfaces may extend in a direction generally perpendicular to the longitudinal axis of the implant 3. A tapered connection interface is disclosed in WO2008/003224, which is incorporated herein in its entirety by reference, and especially the connection interface and abutments disclosed therein. The superstructure may be supported by an annular flat surface of the implant, the tapered surface of the cavity, or an abutment. These structures are disclosed in WO2008/003224, and are therefore not further discussed herein. A generally flat connection interface is also disclosed in the embodiment of Fig. 2.

In other embodiments, the retraction member and the retraction interface forms a bayonet fitting. Alternatively or additionally, one of the retraction interface and the retraction member comprise a recess and the other a mating protrusion. The recess may be a curved recess formed in a wall or surface of the retraction interface or the retraction member. When the retraction interface and the retraction member are interconnected, the implant may be pulled by force towards the superstructure.

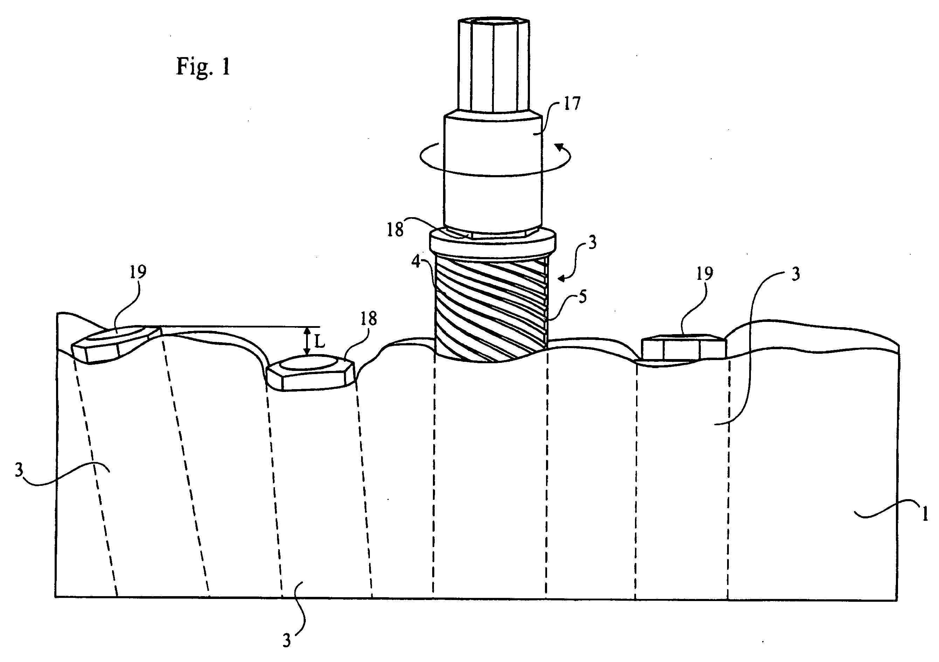

It should be noted that, in Figures 1 - 4, the soft tissue of the gums is not shown.
The soft tissue has been deleted from these figures in order to avoid unnecessary complexity of the figures. It should also be noticed that the connection interface of the implant for connection to the connection interface of the superstructure can be positioned at bone level or soft tissue level.

As can be seen in Figure 1, a plurality of dental implants 3 have been positioned in the jawbone 1. In the figure, three dental implants 3 are shown as already positioned in the jawbone 1 while yet another dental implant 3 is in the process of being screwed into the jawbone 1. The reference numeral 17 indicates an insertion tool 17 that is used to insert, in this case screw, the dental implant 3 into the jawbone 1. For example, the insertion tool 17 is an implant driver. The insertion tool 17 may engage the dental implant 3 at an upper or coronal end 18 of the dental implant 3. The tool engages an insertion interface at the coronal end for engagement with the tool 17. The coronal end 18 of the dental implant 3 may be shaped with, for example, a hexagonal outer periphery that can be engaged by the insertion tool 17 with a complementary shape such that the insertion tool 17 can be used to screw the implant 3 to the jawbone of a patient. Instead of a hexagonal periphery, the coronal end of the implant 3 may have some other shape suitable for interaction with an insertion tool 17 for installing the implant 3. For example, it may have some other polygonal shape. Alternatively, there could be, at the coronal end 18 of the implant 3, structure that defines, for example, a polygonal opening shaped to be engaged by the insertion tool 17 (which would then have to be shaped to engage such an opening) 19 which the insertion tool 17 may engage. Still an alternative is a plurality of lobes and a plurality of complementary shaped protrusions.

In Figure 1, it can also be seen that the position of different dental implants 3 may differ in the vertical dimension. The difference may occur if one or several implants are installed deeper than planned for when the dental bridge 13 was produced. As a consequence, different dental implants 3 can be separated in the vertical dimension by a distance L as indicated in Figure 1. A possible consequence of this can be seen in Figure 2. In Figure 2, a dental bridge 13 has been placed in the patients jaw. The dental bridge 13 may be secured to the left and right dental implants 3a, 3c in a way that is, at least in principle, similar to what is showed in Figure 8. Here implants 3a and 3c have been installed in their planned positions, whereas as implant 3b has been installed too deeply. Since intermediate implant 3b is installed too deeply, it is separated from the dental bridge 13 by a gap indicated as d in Figure 2. It should be understood that it is not necessarily the middle implant 3b that is separated by a gap d from the dental bridge. It could equally well be, for example, the implant 3c to the right in Figure 2 that is separated from the dental bridge 13 by a gap or the implant 3a to the left in Figure 2. In Figure 2, it is shown how the dental bridge 13 may optionally include a lower distance piece 25 that is integral with the dental bridge 13 while the intermediate dental implant 3b may optionally have an upper distance piece 9. However, these are separated by the gap d. If the dental bridge 13 is fastened to the intermediate dental implant 3b in this position, the gap d may cause stress that affects the dental bridge 13, which in turn may fracture. Moreover, in the gap d, bacteria may find a foothold. If the gap can be eliminated, or at least reduced, mechanical tension in the bridge 13 can be reduced leading to reduced risk of fracture of the dental bridge. Additionally, the risk of bacterial infection can also be reduced when the gap is reduced or eliminated completely. Such infections may cause bone resorption, and ultimately implant failure as a possible consequence. The fit between the bridge 13 and the dental implants 3a, 3b, 3c would be improved if the gap d could be eliminated or reduced.

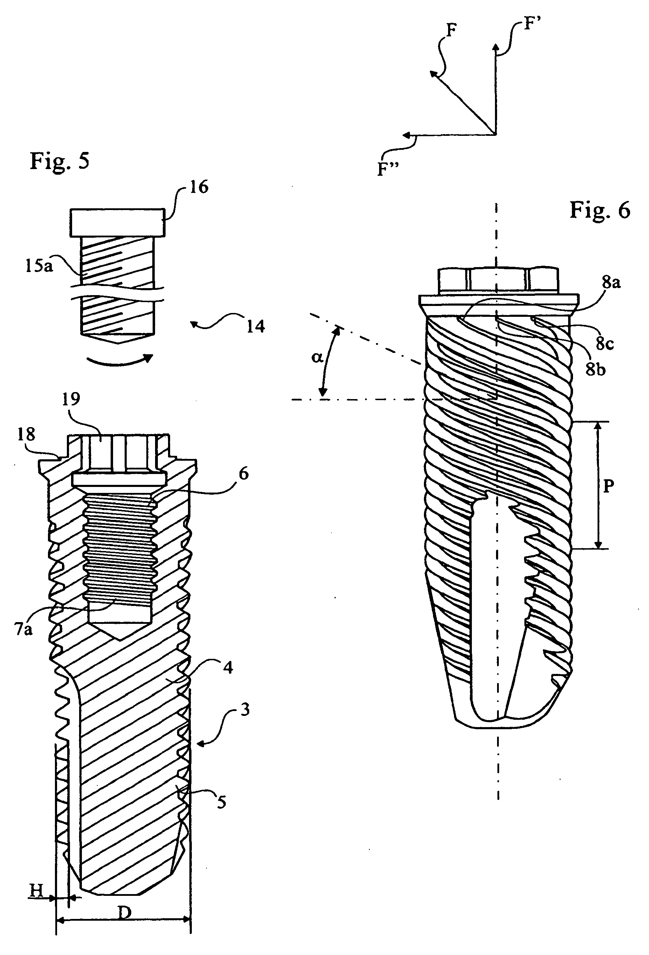

In some embodiments, e.g. as illustrated with reference to the embodiment of Figure 5, the dental implant 3 has a first threaded part 4 with at least one thread 5, i.e. one or several threads 5. The at least one thread 5 is shown as an external thread 5 adapted to engage the jawbone 1 of a patient. The implant 3 also has a second threaded part 6 with at least one thread 7a. In Figure 5, the thread 7a of the second threaded part 6 is an internal (female) thread 7a. The second threaded part 6 of the implant 3 is shown as being placed in part vertically above the first threaded part 4 but it should be understood that the entire second threaded part 6 of the dental implant 3 could, in principle, be located such that it is completely surrounded by the thread(s) 5 of the first threaded part 4. For reasons that will become clear, the thread(s) 7a of the second threaded part 6 has a thread direction that is opposed to that of the thread(s) 5 on the first threaded part (4). Consequently, if the thread(s) 5 of the first threaded part 4 is/are left-threaded, then the thread (or threads) 7a of the second threaded part 6 is (are) right-threaded. In Figure 5, the threaded fastening element 14 is also shown. In Figure 5, the fastening element 14 is a fastening screw that has an external thread 15a (or possibly external threads 15a) that is (are) adapted to cooperate with the thread(s) 7a of the second threaded part 6 of the dental implant 3. The dimensions and the thread geometry of the fastening element 14 and the internal thread(s) 7a of the second threaded part 6 of the dental implant are thus complementary. In embodiments of the invention, the diameter D of the dental implant 3 may be, for example, 3 - 5 mm. As an example, it may be 4 mm. Here, it should be understood that dental implants are usually standardized and are normally available in sizes according to a set standard (which may of course be subject tot changes over time).

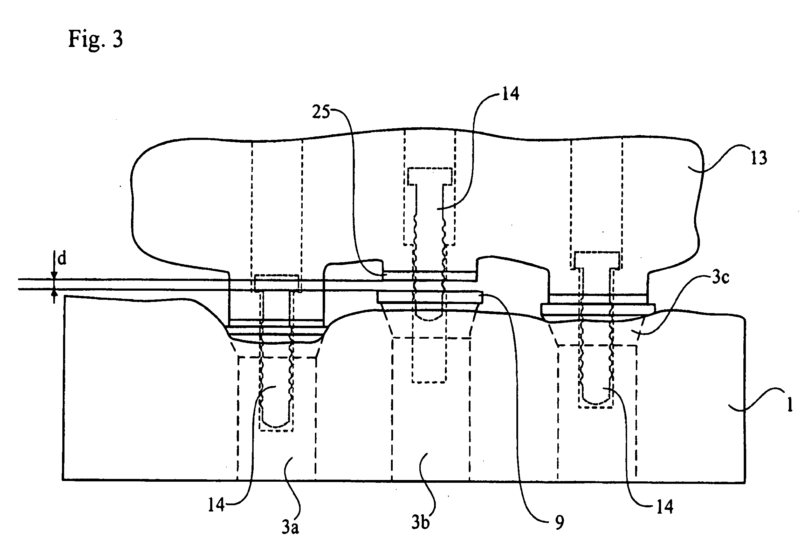

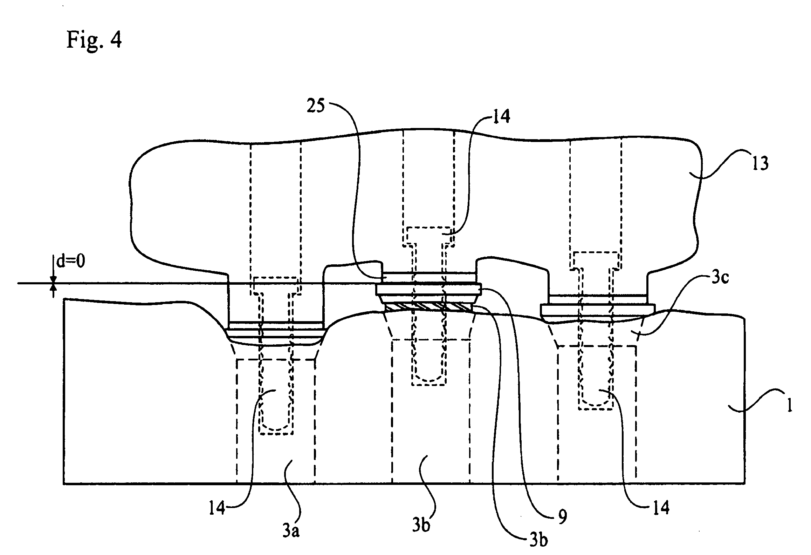

The interaction of the dental implant 3 with the dental bridge 13 will now be explained primarily with reference to Figure 3, Figure 4, and Figure 8. In Figure 3, it is symbolically indicated how retraction member, which is embodied as the fastening element 14, has been inserted in the dental bridge 13 and extends through a through hole of the dental bridge 13 and is in engagement with the dental implant 3. There is still a gap d between the dental implant 3 and the dental bridge 13. The fastening element 14 will now be screwed into the dental implant 3 such that the external thread 15a of the fastening element 14 engages the internal thread 7a on the second threaded part 6 of the dental implant 3. The fastening element 14 cooperates with the internal thread 7a of the dental implant such that the fastening element 14 is screwed into the dental implant 3. When the fastening element 14, e.g. a head thereof, abuts the shoulder 19, which may provide a support surface, the shoulder 19 limits further downward movement of the fastening element 14. As a consequence, when the fastening element 14 is further screwed down the dental implant 3 will be subjected to a force that is directed upwards. Since the first threaded part 4 of the dental implant 3 is left-threaded while the internal thread 7a of the dental implant 3 is right-threaded, the dental implant 3 will now be retraced towards the dental bridge 13. In this embodiment, the dental implant 3 begins to unscrew itself from the jawbone 1 and move towards the dental bridge 13. In Figure 4, this movement has reached its end and the connection interface of the dental implant 3, which is located the upper distance piece 9 of the dental implant 3 in this embodiment, has come into contact with the connection interface of the dental bridge 13, such as the lower distance piece 25 thereof. The gap d has thus been reduced such that d=0 as indicated in Figure 4. It should be understood that the method can be practiced in such a way that the gap d is not entirely eliminated but merely reduced.

In some embodiments of the method of the invention, the implant to be retracted is installed deeper than planned for. The site for that implant can be prepared deeper, such as by drilling with one or several drills, than planned for. When the superstructure is installed, it is supported by e.g. a plurality of implants, whereby a gap is provided between at least one of the implants and the superstructure. For example, the superstructure may be fully supported by three implants, whereas a gap may be provided by any implant in excess of three and the superstructure. The three implants that provide support to the superstructure need not have opposing thread directions of the external thread and the internal thread, e.g. when it is not necessary to adjust such implants. Hence, the method may be employed with threaded implants having a combination of left and right threaded external threads, i.e. each implant having either a right or a left threaded external thread, and both having either left or right threaded internal thread. Hence, some of the implants supporting the dental bridge may have the same thread direction of the internal thread and the external thread.

In order to retract the implant 3, the retraction force or torque applied by the retraction member should be larger that the insertion force or torque required by the insertion tool 17 to insert the implant 3. In dental applications, the recommended insertion torque is normally 35 Ncm for a threaded implant. Hence, the retraction force applied by the retraction member in such an application should be at least 35 Ncm. A counter force equal to the force applied by the retraction member should be distributed to the supports of the superstructure, and thus via the superstructure itself. In order not to break the superstructure, it is important that the retraction force that is necessary to retract the implant is not too large. Providing external threads(s) with a relatively large pitch or pitch angle provides for keeping the necessary retraction force at a suitable level. Furthermore, the structure into which the implant is installed needs to withstand the retraction force. If it is too large, the structure may damaged when the implant is retracted. A relatively large pitch angle provides for less insertion toques and consequently less retraction force compared to a thread having a smaller pitch. A relatively large pitch or pitch angle is in some embodiments provided by a thread having a thread angle α equal to or larger than 45°

With reference to Figure 6, the pitch angle α for the thread or threads 5 of the first threaded part 4 may be equal to or larger than 45°. Suitably, the pitch angle α for the thread(s) 5 may be in the range of 45° - 60°. A large pitch angle α reduces the resistance when the dental implant 3 is unscrewed, i.e. it becomes easier to unscrew the dental implant 3 from the jawbone. With reference to Figure 6, the force F generated by the fastening element 14 may be divided in the vertical component F' and the horizontal component F". A larger pitch angle α makes the vertical force component F' larger and it is easier to make the dental implant 3 move upwards. As a consequence of the large pitch angle, the pitch P for the external thread(s) 5 of the dental implant also becomes relatively large. The pitch P (see Figure 6) may be in the range of 3mm - 5mm. For example, the pitch P may be 4.5 mm. Of course, it should be understood that other values for the pitch P may also be considered, e.g. depending on the diameter of the body of the implant 3, and the number of external threads 5.

The pitch of the thread(s) 15a of the fastening element 14 and the internal thread(s) 7a in the second threaded part 6 of the dental implant 3 may be smaller than that of the external thread(s) 5 of the dental implant 3. In this way, it becomes easier for the internal thread(s) 7a and the fastening element 14 to overcome the opposing force and lift the dental implant 3 upwards. The total movement or retraction upwards may be in the range of, for example, up to about 0.4 mm. Both larger and smaller movements or retractions are conceivable.

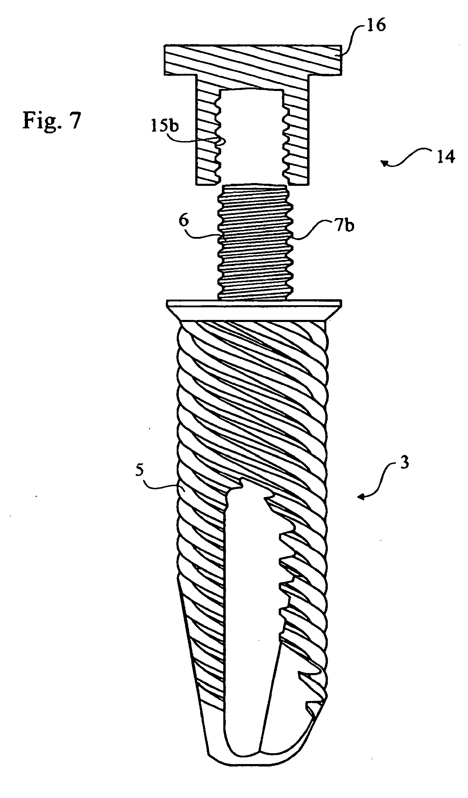

Alternative embodiments, not part of the claimed invention, will now be explained with reference to Figure 7. The embodiment of Figure 7 functions in basically the same way as the embodiment explained with reference to Figure 5. However, the retraction member, embodied as a fastening element 14, has an internal thread 15b (or internal threads 15b) and the retraction interface, embodied as a second threaded part 6 of the dental implant 3, has an external thread 7b (or external threads 7b). Also in this case, the at least one thread 5 on the first threaded part 4 of the dental implant 3 has a thread direction that is the opposite of the thread(s) 7b of the second threaded part 6 of the dental implant 3. Consequently, if the at least one thread 5 on the first threaded part is left-threaded, the thread(s) 7b is/are right-threaded. The internal thread(s) 15b of the fastening element 14 is/are adapted to cooperate with the thread(s) 7b (which is here an external thread 7b).

It can be added that, for many applications, it may be sufficient if the second threaded part 6 has only one thread 7a, 7b.

In both the embodiment of Figure 5 and the embodiment of Figure 7, it would be possible to have a right-threaded thread 5 on the first threaded part 4 but then the thread(s) 7a, 7b on the second threaded part 6 would have to be left-threaded and also the fastening element 14 would have to be left-threaded in such a case. Since the dental implant 3 may be more of a special product than the fastening element 14, the choice can be made to make the at least one thread 5 of the first threaded part 4 a left-threaded thread 5 and use a more standardized component as the fastening element 14. However, it should be understood that the thread(s) 5 on the first threaded part 4 may also be right-threaded. Having a right threaded second threaded part 6 has the benefit that it is a standard threading. Hence, if the superstructure is to be removed a long time, such as several years, after installation of the superstructure, the risk that the superstructure is fractured due to tightening rather than loosening a fastening screw for securing the superstructure to the implant 3 is reduced.

Some other aspects will now be explained with reference to Figure 5 and Figure 6.
If the thread depth of the at least one (external) thread 5 on the first threaded part 4 of the dental implant 3 is relatively large, this tends to have an impact on the jawbone 1 into which the dental implant 3 is secured compared to a thread having a smaller thread depth. Relatively larger thread depth may displace less solid parts of the jawbone 1 to such an extent that the fit between the jawbone 1 and the dental implant becomes less precise, whereby osseointegration is deteriorated leading to prolonged healing in time. To reduce such displacement of the jawbone, the thread depth H as measured from the tip to the root of the thread(s) 5 on the first threaded part 4 may be limited to the range of 0.12 mm - 0.5 mm. In this context, the thread depth is the radial distance between the outer edge or tip of the thread and the root of the thread, as indicated in Figure 5.

It has also been found that extensive contact between the dental implant 3 and the jawbone 1 during fastening of the dental implant 3 may result in a certain degree of frictional heat. To reduce the distance by a thread spiral in contact with bone during insertion of the implant 3, the pitch P may be chosen to be relatively large. In this context, a large pitch P may mean about 3mm - 5mm, for example 4.5 mm.

To ensure a sufficiently effective grip between the dental implant 3 and the jawbone 1 even though the pitch is high, multiple threads may be used in the first threaded part 4. There may thus be many thread entries 8a, 8b, 8c as indicated in Figure 6. It should be understood that each thread entry 8a, 8b, 8c represents the beginning of a separate thread spiral. The first threaded part 4 may suitably have 6 - 14 thread entries 8a, 8b, 8c and a corresponding number of thread spirals. In many realistic embodiments, it may have 8 - 10 thread entries and a corresponding number of thread entries. Thread as described herein defines a thread spiral having a thread entry.

With reference to Figure 6, it may be noted that the pitch P should of course be understood as the vertical distance between crests of the threaded part as measured at a vertical cross section of the implant 3. The lead of the implant 3 is the vertical distance traveled by the implant 3 when the implant 3 turns 360°. Said differently, the lead is the pitch times the number of threads.

Depending on the number of threads and the pitch, the implant 3 may be fully inserted by turning the implant 1-3 full turns (one turn being 360°). The lead of the treads may be controlled by the number of thread entries and the number of thread spirals. Hence, an increased number of thread entries provides for an increased lead. For example, an effective embodiment is an implant having a body with a diameter of 3.75mm, 8 thread entries, and a thread depth of 0.6mm. Another effective embodiment has a diameter of 3.75 mm, 12 thread entries and a corresponding number of thread spirals, and a thread depth of 0.3mm. The former embodiment may provide for improved initial stability compared to the latter embodiment, whereas the latter embodiment may provide for decreased time for osseointegration compared to the former embodiment. Other diameters of the implant body are also foreseeable, such as 3-5.5mm. The number of threads may be adapted to the specific diameter in order to have a suitable pitch angle, such as described above.

In some of the illustrated embodiments, the external surface comprises a cutting flute, whereby each thread spiral comprises at least one cutting edge. However, in other embodiments, only some, or even none, of the thread spirals comprise cutting edges. Instead, the implant 3 may be installed using a thread tap.

Due to the high lead provided by embodiments of the invention, the implant need in some circumstances only be turned a few degrees in order to close the gap d.

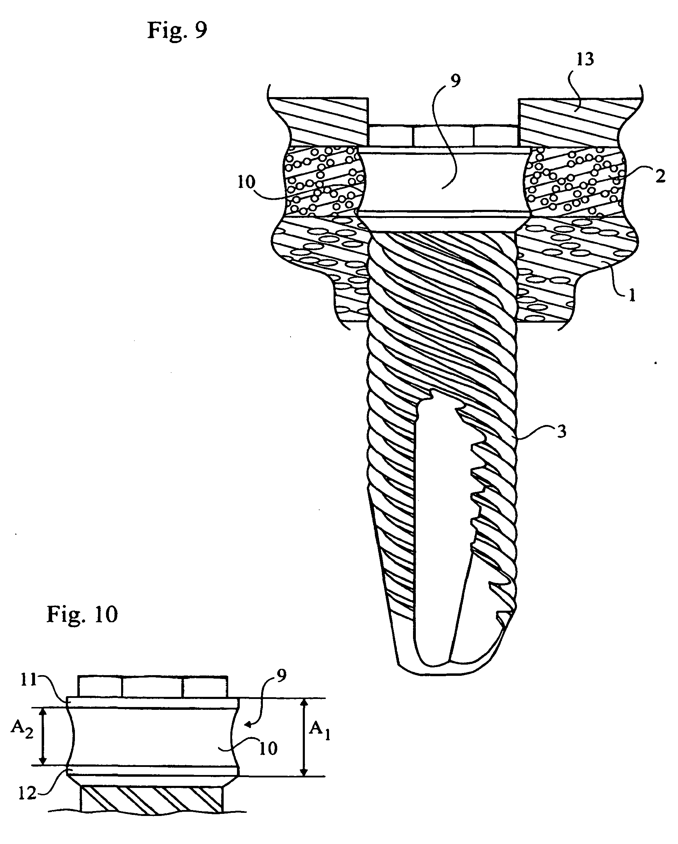

An embodiment will now be explained with reference primarily to Figures 9 and 10. At its coronal end, the dental implant 3 may optionally be provided with a curved distance piece 9. The distance piece 9 will be located in the region separating the jawbone from the dental bridge 13. Experience has showed that a human body strives to maintain a certain thickness of the layer of soft tissue above bone. Where the soft tissue disappears, underlying bone may resorb. Where a dental implant has been placed in the jawbone of a patient, the dental implant will be more secure if the bone does not resorbe. If the dental implant 3 ends immediately above the jawbone 1, this could possibly lead to difficulties in the fit between the dental bridge 13 and the dental implant 3. One possible consequence could be that, for example, contamination and bacterial infections that could harm the soft tissue and/or the bone. For this reason, a distance piece 9 can be placed at the top end of the dental implant 3. The dental implant 3 may be placed in the jawbone 1 in such a way that the distance piece 9 will be located primarily in the region of the soft tissue (the gum) 2. The distance piece 9 may have a waist-shaped portion 10. One way of accomplishing such a waist-shaped portion 10 is by giving the distance piece a curved, such as a concave, contour as indicated in Figure 9 and Figure 10. The curvature allows the soft tissue 2 to attach to the distance piece 9. The distance piece 9 may curve inwardly towards the longitudinal axis of the implant 3. In this way, the distance piece 9 may give a degree of support to the soft tissue. In this way, a biological security zone may be created and the distance piece 9 will have a sealing function that prevents contamination and bacteria. In some embodiments, the waist-shaped portion 10 may have a thickness that is 70 % - 80% of the maximum thickness of the distance piece 9. For example, it may have a thickness that is 75% of the maximum thickness. In Figure 10, the height A₂ of the curved (waist-shaped) section may be at least 1.8 mm. For example, it could be in the range of 1.8mm - 3mm. For example, the height A₂ may be 2.5 mm. The reason for this is that the jawbone usually needs to have at least about 1.8 - 2mm of soft tissue above the jawbone. Without such a layer, the jawbone may resorb, i.e. start to "creep downwards". The distance piece 9 and the waist-shaped portion 10 should therefore have a height that is chosen with this in mind. The height A₁ of the entire distance piece 9 may be somewhat more and could be, for example, 1/6 - 1/5 of the total length of the dental implant 3. As can be seen in Figure 10, the waist-shaped portion 10 of the distance piece 9 can optionally be located between an upper flange 11 and a lower flange 12. The lower flange 12 may be located at a distance above the first threaded part 4 that is, for example, 0.5 mm. Without the upper and lower flanges 11, 12, the waist-shaped portion 10 would be somewhat weaker at the end of the concavity. However, it should be understood that the upper and lower flanges 11, 12 are optional. The distance piece 9, of the surface of the distance piece 9, may be made in the TiUnite™ material that is available from Nobel Biocare AB, Sweden, although other biocompatible materials may also be considered for this purpose.

The external surface of the body of the implant 3 may be generally cylindrical. At its apical end, a tapered portion may be provided, which may facilitate insertion of the implant 3 in a cylindrical hole. For example 80-95% of the portion of the external surface for apposition to bone may be generally cylindrical, whereas the remaining 5-20% at the apical tip of the external surface may be tapered. Having a generally cylindrical body provides for maintaining substantially the same stability of the implant 3 when it is retracted from its applied position, in a cylindrical hole, towards the superstructure. In other embodiments, the external surface of the body for apposition against bone is tapered. Even if the stability may be slightly deteriorated when the implant is retracted from its applied position towards the superstructure, it may still be sufficient to obtain a desired primary stability also with a tapered body.

While the invention has been described above in terms of a method and a dental implant, it should be understood that these categories only reflect different aspects of one and the same technology. The method could thus include steps that would be the inevitable result of using the equipment described, regardless of whether such steps have been explicitly mentioned or not.

In some embodiments, an implant kit comprises, in combination: at least one implant 3 as described above, the superstructure 13 comprising the connection interface adapted to be secured to the implant 3, and a retraction member. The superstructure 13 comprises a through-hole for receiving the retraction member. The retraction member 14 is adapted engage with the retraction interface of the implant 3 to retract the implant 3 from an applied position towards the superstructure.

The retraction member may be a fastening element 14 and may comprise an external thread 15a. The retraction interface of the implant may comprise an internal thread 7a configured to engage the external thread of the retraction member.

The pitch of the fastening element 14 and the pitch of the internal thread 7a of the implant 3 may be smaller than the pitch of an external thread 5 of the implant 3. The retraction member may be right-threaded. The through-hole of the superstructure may comprise a support surface for the retraction member, as discussed above.

Optionally, a dental kit not part of the claimed invention could include only a dental bridge and an implant 3 with two threads with opposite thread direction. Such a kit may be sold and delivered separately to a dentist or dental technician that will then select a suitable retraction member, such as threaded fastening element 14. Similarly, not part of the claimed invention, it is possible to have a kit that comprises only a dental implant 3 comprising two threaded parts 4, 6 with opposed thread directions and a threaded fastening element 14 adapted to cooperate with the thread or threads 7a, 7b of a threaded part 6 of the dental implant 3.

It should be understood that the use of a distance piece 9 with a waist-shaped portion 10 is optional. Embodiments without such a distance piece 9 are possible. Equally, it should also be understood that a distance piece as the one showed in Figures 9 and 10 may also be used even for dental implants 3 that do not have threads 5, 7a, 7b with opposite thread directions. However, if these features are combined, they may both contribute to achieving a good fit between a dental implant and a dental bridge.

The design of the dental implant where the implant 3 has 6 - 14 thread entries, a pitch of 3mm - 5mm and a thread depth of 0.12mm - 0.5mm is intended to be used in combination with the feature that the implant 3 has threaded parts 4, 6 with opposite thread direction but the combination of these features could also be used independently of how the dental implant is otherwise designed.

The external surface of the body of the implant for apposition to bone has been described above as having at least one thread. However, in other embodiments, the external surface does not include a thread, but at least one of a micro or nano textured or pitted surface, such as acid etched, oxidized, or blasted. In still other embodiments, the external surface is recessed, such as comprising micro threads, circular grooves, circular fins, etc. The body may e.g. be circular cylindrical, taped, elliptical, or any other shape where the body can be retracted, e.g. opposite its insertion direction, after it has been applied. This provides for retracting without screwing, such as to simply pull the implant back towards the superstructure. A bayonet fitting may provide such an embodiment.

A suitable material for the dental implant may be, for example, titanium, a titanium-based alloy or a ceramic material.

Embodiments of the invention may be practiced outside the body of the patient, e.g. on a structure such as a model of anatomy of a patient where implants are planned to be installed. Such a model may comprise a model of a patients jawbone. In such embodiments, the implant 3 may comprise structures corresponding to the connection interface and the retraction interface as described above but not other features, such as threads. Such an implant may e.g. be an implant replica. The implant replica may comprise e.g. an unthreaded generally cylindrical body. The model may be used to prepare a pre-made superstructure that is made before installation of the implants in applied positions in the patient. Using the method on a model provides for avoidance of installing the implant replicas when a model is made, e.g. by a cast or by milling. Normally, the implant replica is installed when a plaster cast is made. Instead, the implant replicas can be installed after the model has been produced. The superstructure can comprise a framework and a veneering layer. The framework may be made based on a planning of positions of the implants. Then, the positions of the implant replicas are determined based on the positions of connection interfaces of the framework. The implant 3 may be installed in a patient using a surgical template adapted to install the implant at the planned positions. Planning positions of implants, a superstructure or framework and a surgical template is described in WO2008/145293, which is incorporated herein in its entirety by reference.
The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

## Claims

1. An implant kit comprising, in combination: at least one implant (3), a superstructure (13) adapted to be supported by several implants, and a retraction member (14),
wherein the at least one implant is for insertion into bone (1) of a patient and attachment of the superstructure, the at least one implant comprising
- a body comprising an external surface for apposition to bone, an apical end, and a coronal end;
- an insertion interface at the coronal end for engagement with an insertion tool (17) and for inserting the implant in an insertion direction;
- a connection interface adapted to connect the implant to an connection interface of the superstructure; and
- a retraction interface for engagement with a retraction member when the superstructure is positioned for connection to the connection interface and being configured for retracting the implant from an applied position in a retraction direction,
wherein the external surface comprises a first threaded part (4) with at least one thread (5) adapted to engage the bone (1), the retraction interface comprises a second threaded part (6) with at least one thread (7a), the at least one thread (5) of the first threaded part (4) having a first thread direction and the at least one thread of the second threaded part (6) having a second thread direction that is opposed to that of the at least one thread (5) of the first threaded part (4) wherein the superstructure comprises a connection interface adapted to be secured to the implant and a through-hole (20) for the retraction member,
wherein the retraction member (14) is adapted to engage with the retraction interface of the implant (3) to retract the implant (3) from an applied position towards the superstructure,
and wherein the retraction member, for example a fastening element (14), comprises an external thread (15a), the internal thread (7a) of the implant's retraction interface being configured to engage the external thread of the retraction member.

2. An implant kit according to claim 1, wherein the at least one thread (5) of the first threaded part (4) is an external thread (5) while the at least one thread (7a) of the second threaded part (6) is an internal thread (7a).

3. An implant kit according to any of claims 1 or 2, wherein the at least one thread (5) of the first threaded part (4) is left-threaded and the at least one thread (7a, 7b) of the second threaded part (6) is right-threaded.

4. An implant kit according to any of claims 1 - 3, wherein the thread (5) of the first threaded part (4) has a pitch angle that is equal to or larger than 45°.

5. An implant kit according to any of claims 1 - 4, wherein the first threaded part (4) has a plurality of threads (5).

6. An implant kit according to claim 5, wherein the first threaded part (4) has 6 - 14 threads, preferably 8 - 10 threads.

7. An implant kit according to any of claims 1 - 6, wherein the at least one thread (5) of the first threaded part (4) has a thread depth of 0.12mm - 0.5mm.

8. An implant kit according to any of claims 1 - 7, wherein the at least one thread (5) of the first threaded part (4) has a pitch in the range of 3mm - 5mm.

9. An implant kit according to claim 1, wherein the pitch of the external thread of the retraction member (14) and the pitch of the internal thread (7a) of the implant (3) are smaller than the pitch of an external thread (5) of the implant (3).

10. An implant kit according to claim 1 or 9, wherein the retraction member is right-threaded.

11. An implant kit according to claim 1, wherein the through-hole of the superstructure comprises a support surface for the retraction member.

12. An implant kit according to claim 1, wherein the insertion interface of the implant is selected from the group of: a hexagonal outer periphery, a polygonal shape, a polygonal opening, and a plurality of lobes.

13. An implant kit according to claim 1, wherein the connection interface of the implant comprises a conical structure or flat surface.

14. An implant kit according to claim 1, wherein the superstructure is a dental bridge.

## Patentansprüche

1. Implantatbausatz mit, in Kombination: zumindest einem Implantat (3), einer Überstruktur (13), die ausgebildet ist, um durch mehrere Implantate getragen zu werden, und einem Rückzugselement (14),
wobei das zumindest eine Implantat zum Einbringen in den Knochen (1) eines Patienten und zum Anbringen der Überstruktur ist, wobei das zumindest eine Implantat aufweist
- einen Körper mit einer externen Fläche zur Anlagerung am Knochen, einem apikalen Ende und einem koronalen Ende,
- einer Einbringungsfläche am koronalen Ende zum Eingriff mit einem Einsetzwerkzeug (17) und zum Einsetzen des Implantats in einer Einsetzrichtung,
- einer Verbindungsfläche, die zum Verbinden des Implantats mit einer Verbindungsfläche der Überstruktur ausgebildet ist, und
- einer Rückzugsfläche zum Eingriff mit einem Rückzugselement, wenn die Überstruktur in Verbindung mit der Verbindungsfläche positioniert ist und die ausgebildet ist, um das Implantat von einer Anlegeposition in einer Rückzugsrichtung zurück zu ziehen,
wobei die externe Fläche einen ersten Gewindeteil (4) mit zumindest einem Gewinde (5) aufweist, das ausgebildet ist, um in den Knochen (1) einzugreifen, wobei die Rückzugsfläche einen zweiten Gewindeteil (6) mit zumindest einem Gewinde (7a) aufweist, wobei das zumindest eine Gewinde (5) des ersten Gewindeteils (4) eine erste Gewinderichtung aufweist und das zumindest ein Gewinde des zweiten Gewindeteils (6) eine zweite Gewinderichtung aufweist, die entgegengesetzt zu der des ersten Gewindes (5) des ersten Gewindeteils (4) ist,
wobei die Überstruktur eine Verbindungsfläche aufweist, die ausgebildet ist, um an dem Implantat gesichert zu werden, und ein Durchgangsloch (20) für das Rückzugselement,
wobei das Rückzugselement (14) ausgebildet ist, um mit der Rückzugsfläche des Implantats (3) einzugreifen, um das Implantat (3) von der Anliegeposition in Richtung auf die Überstruktur zurück zu ziehen,
und wobei das Rückzugselement, beispielsweise ein Befestigungselement (14), ein Außengewinde (15a) aufweist, wobei das Innengewinde (7a) der Rückzugsfläche des Implantats ausgebildet ist, um in das Außengewinde des Rückzugselementes einzugreifen.

2. Implantatbausatz nach Anspruch 1, wobei das zumindest eine Gewinde (5) des ersten Gewindeteils (4) ein Außengewinde (5) ist, während das zumindest eine Gewinde (7a) des zweiten Gewindeteils (6) ein Innengewinde (7a) ist.

3. Implantatbausatz nach Anspruch 1 oder 2, wobei das zumindest eine Gewinde (5) des ersten Gewindeteils (4) linksdrehend ist und das zumindest eine Gewinde (7a, 7b) des zweiten Gewindeteils (6) rechtsdrehend ist.

4. Implantatbausatz nach Anspruch 1 bis 3, wobei das Gewinde (5) des ersten Gewindeteils (4) einen Steigungswinkel aufweist, der gleich oder größer ist als 45°.

5. Implantatbausatz nach einem der Ansprüche 1 bis 4, wobei der erste Gewindeteil (4) einer Anzahl von Gewinden (5) aufweist.

6. Implantatbausatz nach Anspruch 5, wobei der erste Gewindeteil (4) 6 bis 14 Gewinde, vorzugsweise 8 bis 10 Gewinde aufweist.

7. Implantatbausatz nach einem der Ansprüche 1 bis 6, wobei das zumindest eine Gewinde (5) des ersten Gewindeteils (4) eine Gewindetiefe von 0,12 mm - 0,5 mm aufweist.

8. Implantatbausatz nach einem der Ansprüche 1 bis 7, wobei das zumindest eine Gewinde (5) des ersten Gewindeteils (4) eine Steigung im Bereich von 3 mm - 5 mm aufweist.

9. Implantatbausatz nach Anspruch 1, wobei die Steigung des Außengewindes des Rückzugselementes (14) die Steigung des Innengewindes (7a) des Implantats (3) kleiner sind als die Steigung eines Außengewindes (5) des Implantats (3).

10. Implantatbausatz nach Anspruch 1 oder 9, wobei das Rückzugselement rechtsdrehend ist.

11. Implantatbausatz nach Anspruch 1, wobei das Durchgangsloch der Überstruktur eine Trägerfläche für das Rückzugselement aufweist.

12. Implantatbausatz nach Anspruch 1, wobei die Einsetzfläche des Implantats ausgewählt ist aus der Gruppe: hexagonaler Außenumfang, Polygonform, polygonale Öffnung und eine Anzahl von Nocken.

13. Implantatbausatz nach Anspruch 1, wobei die Verbindungsfläche des Implantats eine konische Struktur oder eine flache Fläche aufweist.

14. Implantatbausatz nach Anspruch 1, wobei die Überstruktur eine Dentalbrücke ist.

## Revendications

1. Kit d'implant comprenant, en combinaison : au moins un implant (3), une superstructure (13) adaptée à être supportée par plusieurs implants, et un élément de rétraction (14),
dans lequel l'au moins un implant est destiné à une insertion dans un os (1) d'un patient et à une fixation de la superstructure, l'au moins un implant comprenant
- un corps comportant une surface externe pour une apposition à un os, une extrémité apicale, et une extrémité coronaire ;
- une interface d'insertion au niveau de l'extrémité coronaire permettant un engagement avec un outil d'insertion (17) et permettant d'insérer l'implant dans une direction d'insertion ;
- une interface de connexion adaptée pour connecter l'implant à une interface de connexion de la superstructure ; et
- une interface de rétraction permettant un engagement avec un élément de rétraction lorsque la superstructure est positionnée pour une connexion à l'interface de connexion et étant configurée pour retirer l'implant d'une position appliquée dans une direction de rétraction,
dans lequel la surface externe comprend une première partie filetée (4) avec au moins un fil (5) adaptée pour engager l'os (1), l'interface de rétraction comprend une deuxième partie filetée (6) avec au moins un fil (7a), l'au moins un fil (5) de la première partie filetée (4) ayant une première direction de fil et l'au moins un fil de la deuxième partie filetée (6) ayant une deuxième direction de fil qui est opposée à celle de l'au moins un fil (5) de la première partie filetée (4)
dans lequel la superstructure comprend une interface de connexion adaptée à être fixée à l'implant et un trou traversant (20) pour l'élément de rétraction,
dans lequel l'élément de rétraction (14) est adapté pour s'engager avec l'interface de rétraction de l'implant (3) pour retirer l'implant (3) d'une position appliquée vers la superstructure,
et dans lequel l'élément de rétraction, par exemple un élément de fixation (14), comprend un fil externe (15a), le fil interne (7a) de l'interface de rétraction de l'implant étant configuré pour engager le fil externe de l'élément de rétraction.

2. Kit d'implant selon la revendication 1, dans lequel l'au moins un fil (5) de la première partie filetée (4) est un fil externe (5) tandis que l'au moins un fil (7a) de la deuxième partie filetée (6) est un fil interne (7a).

3. Kit d'implant selon l'une des revendications 1 ou 2, dans lequel l'au moins un fil (5) de la première partie filetée (4) a un filetage à gauche et l'au moins un fil (7a, 7b) de la deuxième partie filetée (6) a un filetage à droite.

4. Kit d'implant selon l'une des revendications 1-3, dans lequel le fil (5) de la première partie filetée (4) a un angle de pas qui est supérieur ou égal à 45°.

5. Kit d'implant selon l'une des revendications 1-4, dans lequel la première partie filetée (4) a une pluralité de fils (5).

6. Kit d'implant selon la revendication 5, dans lequel la première partie filetée (4) a de 6 à 14 fils, de préférence de 8 à 10 fils.

7. Kit d'implant selon l'une des revendications 1-6, dans lequel l'au moins un fil (5) de la première partie filetée (4) a une profondeur de fil de 0,12 mm à 0,5 mm.

8. Kit d'implant selon l'une des revendications 1-7, dans lequel l'au moins un fil (5) de la première partie filetée (4) a un pas dans la plage allant de 3 mm à 5 mm.

9. Kit d'implant selon la revendication 1, dans lequel le pas du fil externe de l'élément de rétraction (14) et le pas du fil interne (7a) de l'implant sont plus petits que le pas d'un fil externe (5) de l'implant (3).

10. Kit d'implant selon la revendication 1 ou 9, dans lequel l'élément de rétraction a un filetage à droite.

11. Kit d'implant selon la revendication 1, dans lequel le trou traversant de la superstructure comprend une surface de support pour l'élément de rétraction.

12. Kit d'implant selon la revendication 1, dans lequel l'interface d'insertion de l'implant est choisie à partir du groupe constitué de : une périphérie extérieure hexagonale, une forme polygonale, une ouverture polygonale, et une pluralité de lobes.

13. Kit d'implant selon la revendication 1, dans lequel l'interface de connexion de l'implant comprend une structure canonique ou une surface plane.

14. Kit d'implant selon la revendication 1, dans lequel la superstructure est un bridge dentaire.
